# EUROPEAN PATENT APPLICATION

(11) **EP 4 845 060 A1**
(43) Date of publication of application: **25.11.2026**
(21) Application number: 25178163.9
(22) Date of filing: 22.05.2025
(51) Int. Cl.: H04J 14/02

(54) **METHOD AND SYSTEM FOR PROVIDING DATA CENTER INTERCONNEC-TIONS, DCI**

(71) Applicant: Deutsche Telekom AG, 53113 Bonn (DE)
(72) Inventor: NÖCKEL, Philipp, 53721 Siegburg (DE)
(74) Representative: RDL Patentanwälte PartG mbB

(57) **Abstract**

A system for controlling a lambda, comprising a Passive Data Center Interconnection, PDCI, node located at a Data Center, DC, and comprising a splitter and a combiner respectively connected to the DC, a Central Office, CO, and a dark fiber optically linking the PDCI node to the CO; and a method for controlling a lambda.

## Description

The invention relates to a system for controlling a lambda, comprising a Passive Data Center Interconnection, PDCI, node located at a Data Center, DC, and comprising a splitter and a combiner respectively connected to the Data Center, a Central Office, CO, and a dark fiber optically linking the PDCI node to the CO. The invention further relates to a method for controlling a lambda.

Methods of the above-mentioned type are used to provide DCs with fiber connections. The lambda shall be understood as a specific wavelength of light propagating through the fiber. The fiber supports a plurality of different lambdas each lambda defining a data channel. Correspondingly, the fiber provides a plurality of different data channels to be used independently and simultaneously. Herein, the dark fiber shall be understood as a pair of fibers provided for an exclusive bidirectional use.

DC providers increasingly demand higher data rate connections between their DCs in order to meet a growing demand for data transfer, low latency and seamless cloud services. The growing demand is driven by video streaming, artificial intelligence, e.g., machine learning and Internet of Things, loT, application to name only a few.

However, leasing a sufficient service from an Internet Service Provider, ISP, usually requires an active termination, the active termination restricting a control and a flexibility for a DC provider.

When leasing a dark fiber from the ISP, the DC provider has to invest in advanced optical equipment for monitoring the dark fiber on its own. Apart from that a leased dark fiber may be not completely exploited resulting in a difficult return on investment. In contrast, the ISP leasing a dark fiber to the DC provider has no control over the dark fiber which may cause operational, economic and legal problems for the ISP.

It is, therefore, an object of the invention to provide a system for controlling a lambda which allows for an Internet Service Provider, ISP, to provide a DC provider with a lambda economically, easily and dynamically, and ensure an integrity of respective dark fibers and an adequate use of the provided lambda by the DC. Another object of the invention is to suggest a method for controlling lambda.

One aspect of the invention is a system for controlling a lambda, comprising a Passive Data Center Interconnection, PDCI, node located at a Data Center, DC, and comprising a splitter and a combiner respectively connected to the Data Center, a Central Office, CO, and a dark fiber optically linking the PDCI to the CO. The dark fiber is provided to be exclusively used by the Data Center and to be leased to a provider of the DC, the DC provider for short. The splitter and the combiner are passive optical components causing the Data Center Interconnection, DCI, node to be a PDCI, i.e., a node having no active optical components and, hence, being inexpensive for the ISP.

According to the invention, the CO comprises a Self-Organizing Lambda Manager, SOLM, node with a Micro-Electro-Mechanical System, MEMS, based tunable optical filter for controlling a use of a lambda by the DC and an Erbium-Doped Fiber Amplifier, EDFA, optically coupled to the MEMS based tunable optical filter and to the dark fiber. The SOLM node is an entity configured for controlling the dark fiber. The SOLM comprises the tunable optical filter which is based on a MEMS, i.e., a microscopic device comprising both electronic and mechanically moving parts. The MEMS allows for tuning the optical filter, i.e., for selectively allowing or blocking the lambda. By operating the MEMS based tunable optical filter, the ISP can easily and dynamically provide the DC provider with lambdas on demand.

The SOLM further comprises the EDFA which is configured for sufficiently amplifying optical signals to propagate over a long distance between the CO and the DC with integrity.

Preferably, the SOLM further comprises a test transceiver optically coupled to the dark fiber and configured for periodically transmitting a test signal via the dark fiber to the PDCI node, wherein the PDCI node comprises a Fiber Bragg Grating, FBG, optically coupled to the dark fiber and to the splitter and the combiner for reflecting transmitted test signals to the test transceiver. The test transceiver and the FBG are cooperating components of the system. The FBG comprises an interference filter inscribed in an optical cable, the interference filter reflecting optical signals having a wavelength within a wavelength range defined by the interference filter. Using the test transceiver and the corresponding FBG allows the ISP for ensuring an integrity of the dark fiber, more precisely the pair of fibers. In case the test transceiver does not receive an adequate reflected test signal, an alert may be raised, the alert allowing for the ISP to check the dark fiber and provide a corresponding remedy as soon as possible.

The test transceiver may comprise an Optical Time Domain Reflectometer, OTDR, or a tunable laser or a fixed wavelength laser. Of course, the test transceiver is configured for both transmitting an optical signal and receiving an optical signal. It is noted that each fiber, i.e., both directions of the dark fiber are monitored by the test transceiver. The fixed wavelength laser may exemplarily emit a light having a wavelength of 1,510 nm.

In an embodiment, the system comprises another PDCI located at another DC and another dark fiber optically linking the other PDCI to the CO, the SOLM node comprising another EDFA optically coupled to the MEMS based tunable optical filter and to the other dark fiber. A system comprising a single SOLM and exactly two PDCls allows for a point-to-point connection of two DCs, the point-to-point connection representing a minimal feasible topology of the inventive system. In other words, the SOLM has two optical interfaces to respectively connect a DC to.

The SOLM node advantageously comprises a respective Optical Channel Performance Monitor, OCPM, optically coupled to each EDFA for monitoring a use of the dark fiber. The OCPM allows the ISP for permanently detect lambdas used by the DC. Particularly, the ISP can register whether all purchased lambdas are really used by the DC and whether the DC transmits light signals having wavelengths different from the purchased lambdas. Thus, an adequate and efficient use of the dark fiber is continuously ensured. The OCPM may be an inexpensive component of the SOLM.

The system may comprise a plurality of SOLM nodes wherein at least two SOLM nodes are optically linked by a dark fiber. The SOLM nodes may be linearly arranged, i.e., form a chain of SOLM nodes which is referred to as a ring/horseshoe topology of the system. Alternatively, the SOLM nodes may be arranged as a mesh which is referred to as a meshed topology of the system.

At least one dark fiber may comprise an Optical Line Amplifier, OLA. The OLA allows for a longer distance between neighboring SOLM nodes or a SOLM node and a DC optically linked to the SOLM node, i.e., a larger span.

In another embodiment, at least one SOLM node comprises a splitter and/or a combiner, the MEMS based tunable optical filter being a filter array. The splitter and/or combiner, on the one hand, and the filter array, on the other hand, allow for more than two optical interfaces, i.e., for connecting more than two DCs or neighboring SOLMs to the at least one SOLM.

Favorably, the system comprises a Network Service Orchestrator, NSO, connected to each SOLM node. The NSO is a common network component allowing for managing network services transparently, i.e., without affecting a performance of the network or services provided by the network.

The system may further comprise an Internet Service Provider, ISP, Data Communication Network, DCN, connected to the NSO. The DCN is understood to be a plurality of interconnected devices exchanging data wireless or via a wire according to established protocols.

Preferably, the system comprises a web portal connected to the NSO for operating the MEMS based tunable optical filter. The web portal may provide a graphical user interface, GUI, to be accessed by the ISP for easily configuring the MEMS based tunable optical filter. The web portal may also be connected to each DC and configured for allowing DC providers to purchase and cancel lambdas using another GUI.

Another aspect of the invention is a method for controlling a lambda. Controlling the lambda comprises allowing or blocking the lambda.

According to the invention, a Micro-Electro-Mechanical System, MEMS, based tunable optical filter of a Self-Organizing Lambda Manager, SOLM, node of a Central Office, CO, controls a use of a lambda by a DC connected to by a splitter and a combiner, respectively, of a Passive Data Center Interconnection, PDCI, node located at the Data Center, DC, a dark fiber optically linking the PDCI node to the CO and an Erbium-Doped Fiber Amplifier, EDFA, optically coupled to the MEMS based tunable optical filter and to the dark fiber. In other words, each lambda supported by the dark fiber may be independently allowed or blocked by a corresponding configuration of the MEMS.

Preferably, a test transceiver of the SOLM node optically coupled to the dark fiber periodically transmits a test signal via the dark fiber to the PDCI node and a Fiber Bragg Grating, FBG, of the PDCI node optically coupled to the dark fiber and to the splitter and the combiner reflects transmitted test signals to the test transceiver. The test transceiver and the FBG cooperate to ensure an integrity of the dark fiber, i.e., both fibers of the dark fiber.

In an embodiment, an Optical Channel Performance Monitor, OCPM, of the SOLM node optically coupled to the EDFA monitors a use of the dark fiber. The OCPM detects an appropriate or inappropriate use of lambdas, i.e., wavelength ranges, thus assisting the ISP in maintaining the dark fiber and provide remedies in case the dark fiber is deficient.

Advantageously, the MEMS based tunable optical filter is operated by a web portal connected to a Network Service Orchestrator connected to the MEMS based tunable optical filter. The web portal facilitates operation of the SOLM, particularly the MEMS. The web portal may additionally allow purchases and cancellations of lambdas for the DC provider.

An essential advantage of the inventive system is that the system allows for an Internet Service Provider, ISP, to easily, dynamically and economically provide a DC provider with a lambda and ensure an integrity of respective dark fibers and an adequate use of the provided lambda by the DC.

It shall be understood that the features described previously and to be described subsequently may be used not only in the indicated combinations but also in different combinations or on their own without leaving the scope of the present invention.

The invention is described in detail by means of exemplary embodiments and with reference to the drawings. Like components are indicated by like reference numerals throughout the drawings.
- Fig. 1: schematically shows an entity diagram of a system according to a first embodiment of the invention for controlling a lambda ;
- Fig. 2: schematically shows a SOLM for a system according to another embodiment of the invention for controlling a lambda ;
- Fig. 3: schematically shows three systems according to embodiments of the invention for controlling a lambda, the systems having different topologies ;
- Fig. 4: schematically shows a system according to still another embodiment of the invention for controlling a lambda.

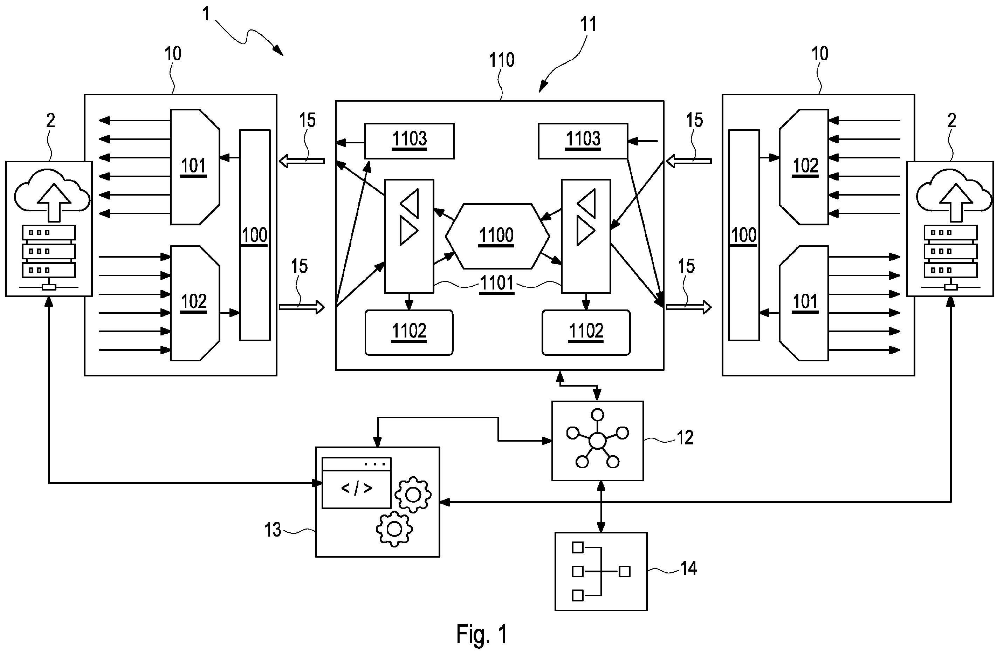

Fig. 1 schematically shows an entity diagram of a system 1 according to a first embodiment the invention for controlling a lambda. The system 1 comprises a Passive Data Center Interconnection, PDCI, node 10 which is located at a Data Center, DC, 2 and comprises a splitter 101 and a combiner 102 respectively connected to the DC 2.

The system 1 further comprises a Central Office, CO, 11 and a dark fiber 15 optically linking the PDCI node 10 to the CO 11. The CO 11 comprises a Self-Organizing Lambda Manager, SOLM, node 110 with a Micro-Electro-Mechanical System, MEMS, based tunable optical filter 1100 for controlling a use of a lambda by the DC 2 and an Erbium-Doped Fiber Amplifier, EDFA, 1101 which is optically coupled both to the MEMS based tunable optical filter 1100 and to the dark fiber 15.

The SOLM node 110 preferably comprises a test transceiver 1103 which is optically coupled to the dark fiber 15 and configured for periodically transmitting a test signal via the dark fiber 15 to the PDCI node 10. Correspondingly, the PDCI node 10 comprises a Fiber Bragg Grating, FBG, 100 configured for reflecting transmitted test signals to the test transceiver 1103. The FBG 100 is optically coupled to the dark fiber 15 and to the splitter 101 and the combiner 102.

For instance, the test transceiver 1103 comprises an Optical Time Domain Reflectometer, OTDR, or a tunable laser or a fixed wavelength laser.

The system may also comprise another PDCI 10 located at another DC 2 and another dark fiber 15 optically linking the other PDCI 10 to the CO 11. The SOLM node 110 may comprise another EDFA 1101 which is optically coupled to the MEMS based tunable optical filter 1100 and to the other dark fiber 15. In other words, the SOLM node 110 has two optical interfaces which may be referred to as 'west' and 'east'.

The SOLM node 110 advantageously comprises respective Optical Channel Performance Monitors, OCPM, 1102 which are optically coupled to each EDFA 1101 and configured for monitoring a use of the dark fibers 15.

The system 1 may additionally comprise a Network Service Orchestrator, NSO, 12 connected to each SOLM node 110 and/or an Internet Service Provider, ISP, Data Communication Network, DCN, 14 connected to the NSO 12. Advantageously, the system 1 comprises a web portal 13 connected to the NSO 12 for operating the MEMS based tunable optical filter 1100. The web portal 13 may additionally be configured for being accessed by a DC provider purchasing and canceling lambdas on demand.

For controlling a lambda, the system 1 is operated in a method according to an embodiment of the invention as follows.

The Micro-Electro-Mechanical System, MEMS, based tunable optical filter 1100 of the Self-Organizing Lambda Manager, SOLM, node 110 of the Central Office, CO, 11 controls a use of the lambda by the DC 2 connected to by the splitter 101 and the combiner 102, respectively, of the Passive Data Center Interconnection, PDCI, node 10 located at the Data Center, DC, 2 wherein the dark fiber 15 optically links the PDCI node 10 to the CO 11 and the Erbium-Doped Fiber Amplifier, EDFA, 1101 is optically coupled to the MEMS based tunable optical filter 1100 and to the dark fiber 15.

The test transceiver 1103 of the SOLM node 110 optically coupled to the dark fiber 15 may periodically transmit a test signal via the dark fiber 15 to the PDCI node 10 and the Fiber Bragg Grating, FBG, 100 of the PDCI node 10 optically coupled to the dark fiber 15 and to the splitter 101 and the combiner 102 reflects transmitted test signals to the test transceiver 1103.

The Optical Channel Performance Monitor, OCPM, 1102 of the SOLM node 110 optically coupled to the EDFA 1101 may monitor a use of the dark fiber 15.

The MEMS based tunable optical filter 1100 is preferably operated by a web portal 13 connected to the Network Service Orchestrator, NSO, 12 connected to the MEMS based tunable optical filter 1100.

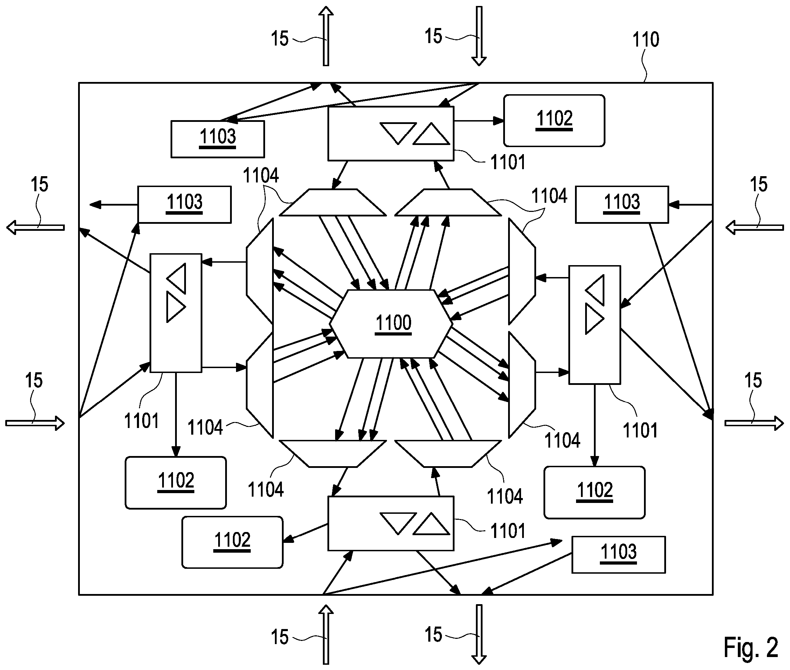

Fig. 2 schematically shows a SOLM 110 for a system 1 according to another embodiment of the invention for controlling a lambda. The SOLM node 110 comprises a splitter 1104 and/or a combiner 1104, more precisely four splitters 1104 and four combiners 1104. Apart from that, the MEMS based tunable optical filter 1100 is a filter array. The SOLM 110 exemplarily has four optical interfaces which may be referred to as 'west' and 'east', 'north' and 'south'. Of course, the SOLM 110 may be generally configured having N optical interfaces.

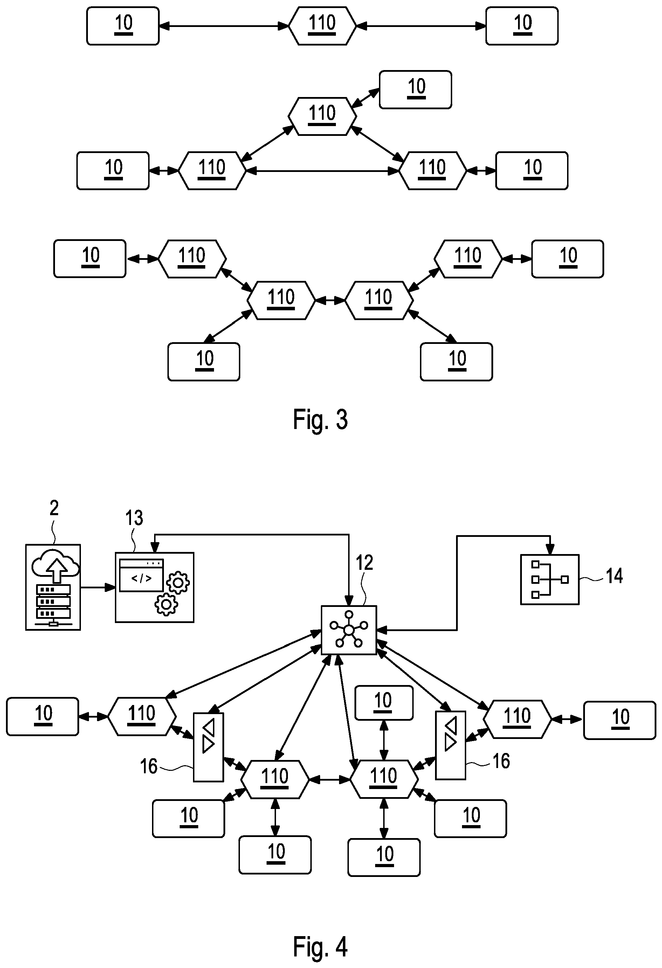

Fig. 3 schematically shows three systems 1 according to embodiments of the invention for controlling a lambda, the systems 1 having different topologies. The upper topology is referred to as a point-to-point topology optically linking exactly two DCs 2 and, for instance, having a single SOLM 110. The central topology is referred to as a meshed topology and optically linking more than two, exemplarily three, DCs 2. Each SOLM 110 has at least three optical interfaces. Each pair of SOLMs 110 is optically linked by a dark fiber 15.

The lower topology is referred to as a ring/horseshoe topology optically linking more than two, exemplarily four, DCs 2 and having four SOLMs 110. The SOLMs 110 are linearly arranged, respective neighboring SOLMs 110 being optically linked by a dark fiber 15. Two SOLMs 110 have at least two optical interfaces corresponding to the SOLM 110 shown in fig. 1. The remaining two SOLMs 110 have at least three optical interfaces.

Generally speaking, a topology may have a plurality of SOLM nodes 110 wherein the SOLM nodes 110 are optically linked by dark fibers 15 to form a connected graph.

Fig. 4 schematically shows a system 1 according to still another embodiment of the invention for controlling a lambda. The topology has four SOLMs 110 arranged linearly, respective neighboring SOLMs 110 being optically linked by a dark fiber 15. Exemplarily, two dark fibers 15 comprise an Optical Line Amplifier, OLA, 16. The NSO 12 is additionally connected to each OLA 16. Two SOLMs 110 have at least two optical interfaces corresponding to the SOLM 110 shown in fig. 1. Another SOLM 110 has at least four optical interfaces corresponding to the SOLM 110 shown in fig. 2. Still another SOLM 110 has at least five optical interfaces.

### Reference Numerals

- 1: System
- 10: Passive Data Center Interconnection, PDCI, node
- 100: Fiber Bragg Grating, FBG
- 101: splitter
- 102: combiner
- 11: Central Office
- 110: Self-Organizing Lambda Manager, SOLM, node
- 1100: Micro-Electro-Mechanical System, MEMS, based tunable optical optical filter
- 1101: Erbium-Doped Fiber Amplifier, EDFA
- 1102: Optical Channel Performance Monitor, OCPM
- 1103: test transceiver
- 1104: splitter/combiner
- 12: Network Service Orchestrator, NSO
- 13: web portal
- 14: Data Communication Network, DCN
- 15: dark fiber
- 16: Optical Line Amplifier, OLA
- 2: Data Center, DC

## Claims

1. A system (1) for controlling a lambda, comprising a Passive Data Center Interconnection, PDCI, node (10) located at a Data Center, DC, (2) and comprising a splitter (101) and a combiner (102) respectively connected to the DC (2), a Central Office, CO, (11) and a dark fiber (15) optically linking the PDCI node (10) to the CO (11), the CO (11) comprising a Self-Organizing Lambda Manager, SOLM, node (110) with a Micro-Electro-Mechanical System, MEMS, based tunable optical filter (1100) for controlling a use of a lambda by the DC (2) and an Erbium-Doped Fiber Amplifier, EDFA, (1101) optically coupled to the MEMS based tunable optical filter (1100) and to the dark fiber (15).

2. The system according to claim 1, wherein the SOLM node (110) comprises a test transceiver (1103) optically coupled to the dark fiber (15) and configured for periodically transmitting a test signal via the dark fiber (15) to the PDCI node (10), wherein the PDCI node (10) comprises a Fiber Bragg Grating, FBG, (100) optically coupled to the dark fiber (15) and to the splitter (101) and the combiner (102) for reflecting transmitted test signals to the test transceiver (1103).

3. The system according to claim 2, wherein the test transceiver (1103) comprises an Optical Time Domain Reflectometer, OTDR, or a tunable laser or a fixed wavelength laser.

4. The system according to one of claims 1 to 3, comprising another PDCI (10) located at another DC (2) and another dark fiber (15) optically linking the other PDCI (10) to the CO (11), the SOLM node (110) comprising another ED-FA (1101) optically coupled to the MEMS based tunable optical filter (1100) and to the other dark fiber (15).

5. The system according to one of claims 1 to 4, wherein the SOLM node (110) comprises a respective Optical Channel Performance Monitor, OCPM, (1102) optically coupled to each EDFA (1101) for monitoring a use of the dark fiber (15).

6. The system according to one of claims 1 to 5, comprising a plurality of SOLM nodes (110) wherein at least two SOLM nodes (110) are optically linked by a dark fiber (15).

7. The system according to one of claims 1 to 6, wherein at least one dark fiber (15) comprises an Optical Line Amplifier, OLA, (16).

8. The system according to one of claims 1 to 7, wherein at least one SOLM node (110) comprises a splitter (1104) and/or a combiner (1104), the MEMS based tunable optical filter (1100) being a filter array.

9. The system according to one of claims 1 to 8, comprising a Network Service Orchestrator, NSO, (12) connected to each SOLM node (110).

10. The system according to claim 9, comprising an Internet Service Provider, ISP, Data Communication Network, DCN, (14) connected to the NSO (12).

11. The system according to claim 9 or 10, comprising a web portal (13) connected to the NSO (12) for operating the MEMS based tunable optical filter (1100).

12. A method for controlling a lambda, wherein a Micro-Electro-Mechanical System, MEMS, based tunable optical filter (1100) of a Self-Organizing Lambda Manager, SOLM, node (110) of a Central Office, CO, (11) controls a use of a lambda by a DC (2) connected to by a splitter (101) and a combiner (102), respectively, of a Passive Data Center Interconnection, PDCI, node (10) located at the Data Center, DC, (2), a dark fiber (15) optically linking the PDCI node (10) to the CO (11) and an Erbium-Doped Fiber Amplifier, EDFA, (1101) optically coupled to the MEMS based tunable optical filter (1100) and to the dark fiber (15).

13. The method according to claim 12, wherein a test transceiver (1103) of the SOLM node (110) optically coupled to the dark fiber (15) periodically transmits a test signal via the dark fiber (15) to the DC (2) and a Fiber Bragg Grating, FBG, (100) of the PDCI node (10) optically coupled to the dark fiber (15) and to the splitter (101) and the combiner (102) reflects transmitted test signals to the test transceiver (1103).

14. The method according to claim 12 or 13, wherein an Optical Channel Performance Monitor, OCPM, (1102) of the SOLM node (110) optically coupled to the EDFA (1101) monitors a use of the dark fiber (15).

15. The method according to one of claims 12 to 14, wherein the MEMS based tunable optical filter (1100) is operated by a web portal (13) connected to a Network Service Orchestrator (12) connected to the MEMS based tunable optical filter (1100).

## Amended claims

### Amended claims in accordance with Rule 137(2) EPC.

1. A system (1) for controlling a lambda, comprising a Passive Data Center Interconnection, PDCI, node (10) located at a Data Center, DC, (2) and comprising a splitter (101) and a combiner (102) respectively connected to the DC (2) and further comprising a Central Office, CO, (11) and a dark fiber (15) optically linking the PDCI node (10) to the CO (11), the CO (11) comprising a Self-Organizing Lambda Manager, SOLM, node (110) with a Micro-Electro-Mechanical System, MEMS, based tunable optical filter (1100) for controlling a use of a lambda by the DC (2) and an Erbium-Doped Fiber Amplifier, EDFA, (1101) optically coupled to the MEMS based tunable optical filter (1100) and to the dark fiber (15).

2. The system according to claim 1, wherein the SOLM node (110) comprises a test transceiver (1103) optically coupled to the dark fiber (15) and configured for periodically transmitting a test signal via the dark fiber (15) to the PDCI node (10), wherein the PDCI node (10) comprises a Fiber Bragg Grating, FBG, (100) optically coupled to the dark fiber (15) and to the splitter (101) and the combiner (102) for reflecting transmitted test signals to the test transceiver (1103).

3. The system according to claim 2, wherein the test transceiver (1103) comprises an Optical Time Domain Reflectometer, OTDR, or a tunable laser or a fixed wavelength laser.

4. The system according to one of claims 1 to 4, comprising another PDCI (10) located at another DC (2) and another dark fiber (15) optically linking the other PDCI (10) to the CO (11), the SOLM node (110) comprising another ED-FA (1101) optically coupled to the MEMS based tunable optical filter (1100) and to the other dark fiber (15).

5. The system according to one of claims 1 to 4, wherein the SOLM node (110) comprises a respective Optical Channel Performance Monitor, OCPM, (1102) optically coupled to each EDFA (1101) for monitoring a use of the dark fiber (15).

6. The system according to one of claims 1 to 5, comprising a plurality of SOLM nodes (110) wherein at least two SOLM nodes (110) are optically linked by a dark fiber (15).

7. The system according to one of claims 1 to 6, wherein at least one dark fiber (15) comprises an Optical Line Amplifier, OLA, (16).

8. The system according to one of claims 1 to 7, wherein at least one SOLM node (110) comprises a splitter (1104) and/or a combiner (1104), the MEMS based tunable optical filter (1100) being a filter array.

9. The system according to one of claims 1 to 8, comprising a Network Service Orchestrator, NSO, (12) connected to each SOLM node (110).

10. The system according to claim 9, comprising an Internet Service Provider, ISP, Data Communication Network, DCN, (14) connected to the NSO (12).

11. The system according to claim 9 or 10, comprising a web portal (13) connected to the NSO (12) for operating the MEMS based tunable optical filter (1100).

12. A method for controlling a lambda, wherein a Micro-Electro-Mechanical System, MEMS, based tunable optical filter (1100) of a Self-Organizing Lambda Manager, SOLM, node (110) of a Central Office, CO, (11) controls a use of a lambda by a DC (2) connected to by a splitter (101) and a combiner (102), respectively, of a Passive Data Center Interconnection, PDCI, node (10) located at the Data Center, DC, (2), a dark fiber (15) optically linking the PDCI node (10) to the CO (11) and an Erbium-Doped Fiber Amplifier, EDFA, (1101) optically coupled to the MEMS based tunable optical filter (1100) and to the dark fiber (15).

13. The method according to claim 12, wherein a test transceiver (1103) of the SOLM node (110) optically coupled to the dark fiber (15) periodically transmits a test signal via the dark fiber (15) to the DC (2) and a Fiber Bragg Grating, FBG, (100) of the PDCI node (10) optically coupled to the dark fiber (15) and to the splitter (101) and the combiner (102) reflects transmitted test signals to the test transceiver (1103).

14. The method according to claim 12 or 13, wherein an Optical Channel Performance Monitor, OCPM, (1102) of the SOLM node (110) optically coupled to the EDFA (1101) monitors a use of the dark fiber (15).

15. The method according to one of claims 12 to 14, wherein the MEMS based tunable optical filter (1100) is operated by a web portal (13) connected to a Network Service Orchestrator (12) connected to the MEMS based tunable optical filter (1100).
